# EUROPEAN PATENT SPECIFICATION

(11) **EP 2 756 441 B1**
(45) Date of publication and mention of the grant of the patent: **01.03.2017**
(21) Application number: 12832696.4
(22) Date of filing: 14.09.2012
(51) Int. Cl.: G06F 21/00, G06F 21/62, G06F 21/55, G06F 21/56, G06F 21/60, H04L 29/06

(54) **APPARATUS AND METHODS FOR PREVENTING PAYMENT WEBPAGE TAMPERING**
VORRICHTUNG UND VERFAHREN ZUR VERHINDERUNG DER MANIPULATION VON ZAHLUNGSWEBSEITEN
APPAREILS ET PROCÉDÉS DESTINÉS À PRÉVENIR L'ALTÉRATION DE PAGES WEB DE PAIEMENT

(30) Priority: 16.09.2011 CN 201110277604
(43) Date of publication of application: 23.07.2014
(73) Proprietor: Tencent Technology (Shenzhen) Company Limited, Guangdong 518000 (CN)
(72) Inventor: LIN, Jie, Shenzhen City Guangdong 518000 (CN); BAN, Wusan, Shenzhen City Guangdong 518000 (CN); MENG, Qiyuan, Shenzhen City Guangdong 518000 (CN)
(74) Representative: Gunzelmann, Rainer
(86) International application number: PCT/CN2012/081385
(87) International publication number: WO 2013/037304

(56) References cited:
- WO-A1-2010/003317
- CN-A- 101 622 621
- CN-A- 101 778 137
- CN-A- 102 034 043
- US-A1- 2008 301 051
- ZHUOWEI LI ET AL: "SpyShield: Preserving Privacy from Spy Add-Ons", 5 September 2007 (2007-09-05), RECENT ADVANCES IN INTRUSION DETECTION; [LECTURE NOTES IN COMPUTER SCIENCE], SPRINGER BERLIN HEIDELBERG, BERLIN, HEIDELBERG, PAGE(S) 296 - 316, XP019098099, ISBN: 978-3-540-74319-4 * abstract * * pages 296,299; figure 1; table 2 * * page 303 - page 305 *
- ENGIN KIRDA AND CHRISTOPHER KRUEGEL SECURE SYSTEMS LAB TECHNICAL UNIVERSITY VIENNA {EK ET AL: "Behavior-based Spyware Detection", USENIX,, 2 August 2006 (2006-08-02), pages 1-16, XP061011066, [retrieved on 2006-08-02]
- Arbeitskreis Security Auf Der 39 ET AL: "Neues aus dem DFN-CERT März 2003 - November 2003", , 1 January 2003 (2003-01-01), XP055178555, Retrieved from the Internet: URL:https://www.dfn.de/fileadmin/3Beratung /Betriebstagungen/bt39/aksec-BT39.pdf [retrieved on 2015-03-23]

## Description

### FIELD OF THE INVENTION

The present disclosure relates generally to Internet technologies, and more particularly, to method and apparatus for preventing payment webpage tampering on the Internet.

### BACKGROUND OF THE INVENTION

As Internet technologies continue to evolve, electronic commerce (or e-commerce) has become a very important part of the Internet. But safety and security issues in e-commerce have restrained the Internet technologies from further rapid development and deployment. For example, when a user makes an online payment through a browser payment webpage, the payment webpage may be tampered by malicious programs such as a Trojan program, and the user's payment may be directed to an illegitimate party, causing the user to suffer economic losses.

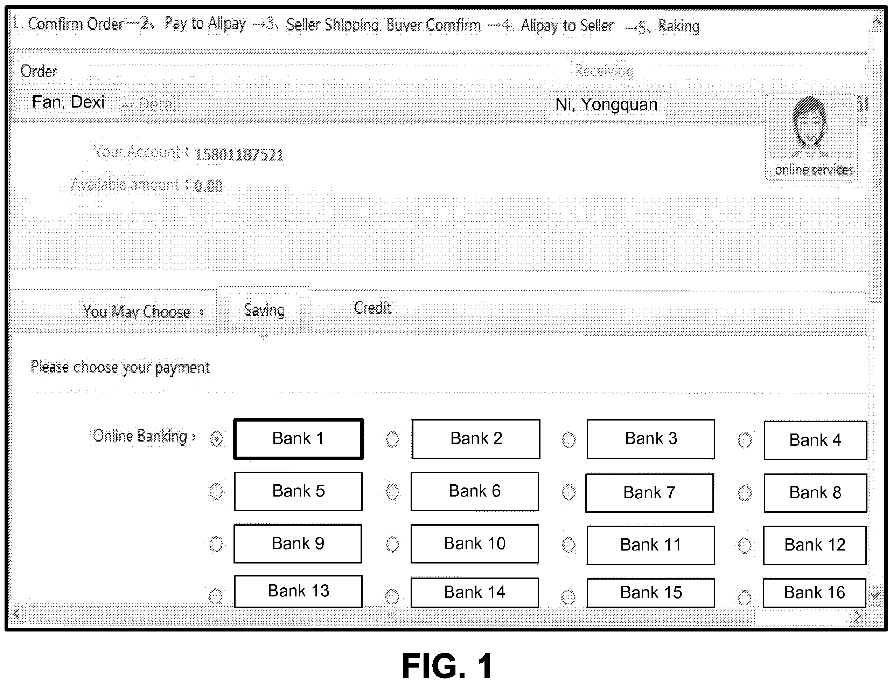

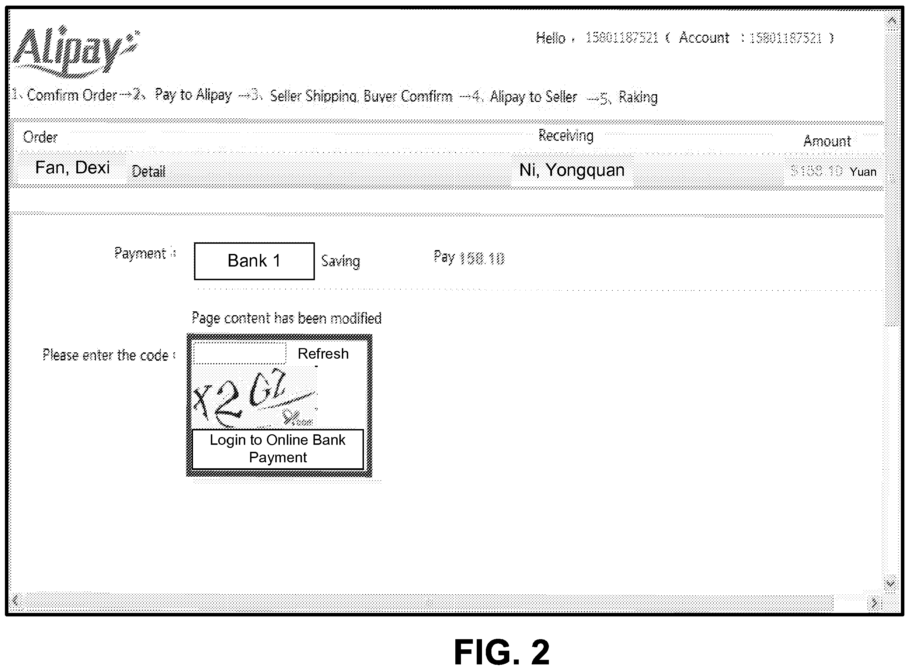

FIG. 1 shows an exemplary webpage that enables a user to execute a financial transaction via online banking. FIG. 2 shows an exemplary webpage that enables a user to confirm a payment via online banking. During the webpage transactions, a Trojan program may intervene and tamper the payment webpages behind the scene and redirect the user's payment request to tampered, illegitimate payment webpages. The user's payment is thus paid to the illegitimate party through the payment webpage tampered by the Trojan program.

Therefore, a heretofore unaddressed need exists in the art to address the aforementioned deficiencies and inadequacies.

US2008/0301051A1 provides a method of detecting malware on a computer and comprising scanning a system memory of the computer, and/or code being injected into the system memory, for known strings indicative of banking Trojans.

Zhuowei Li et al., "SpyShield: Preserving Privacy from Spy Add-Ons", propose a new containment technique.

### SUMMARY OF THE INVENTION

Certain aspects of the present disclosure are directed to a method for preventing payment page tampering. The method includes determining whether a first request received by a webpage modification interface is an external request, the external request being a inter-process request made by a second process different from a first process running the webpage modification interface, the first process being executed by a processor; and in response to determining that the first request is an external request, intercepting the first request, in which the webpage modification interface includes a HTML modification interface, the external request includes a request made to a write function of the HTML modification interface, and the write function of the HTML modification interface allows a program to provide a content to be rendered to a browser and includes a Write function of an IHTMLDocument2 interface; and intercepting the first request includes: intercepting a call made from the second process to the write function of the HTML modification interface to modify a content of a webpage which is currently rendered by the browser.

Certain aspects of the present disclosure are directed to an apparatus for preventing payment page tampering. The apparatus includes a modification interface detector configured to determine whether a first request received by a webpage modification interface is an external request, the external request being a inter-process request made by a second process different from a first process running the webpage modification interface; and a request interceptor configured to, in response to determining that the first request is an external request, intercept the first request, in which the webpage modification interface includes a HTML modification interface, the external request includes a request made to a write function of the HTML modification interface, and the write function of the HTML modification interface allows a program to provide a content to be rendered to a browser and includes a Write function of an IHTMLDocument2 interface; and a modification interception unit configured to intercept a call made from the second process to the Write function of the HTML modification interface to modify a content of a webpage which is currently rendered by the browser.

Certain aspects of the present disclosure are directed to a computer-readable medium storing instructions which, when executed by a processor, cause a computer to perform a method for preventing payment page tampering. The method includes determining whether a first request received by a webpage modification interface is an external request, the external request being a inter-process request made by a second process different from a first process running the webpage modification interface; and in response to determining that the first request is an external request, intercepting the first request, in which the webpage modification interface includes a HTML modification interface, the external request includes a request made to a write function of the HTML modification interface, and the write function of the HTML modification interface allows a program to provide a content to be rendered to a browser and includes a Write function of an IHTMLDocument2 interface; and intercepting the first request includes: intercepting a call made from the second process to the write function of the HTML modification interface to modify a content of a webpage which is currently rendered by the browser.

Further areas of applicability of the present disclosure will become apparent from the detailed description provided hereinafter. It should be understood that the detailed description and specific examples are intended for purposes of illustration only and are not intended to limit the scope of the disclosure.

### BRIEF DESCRIPTION OF THE DRAWING

The accompanying drawings illustrate one or more embodiments of the invention and, together with the written description, serve to explain the principles of the invention. Wherever possible, the same reference numbers are used throughout the drawings to refer to the same or like procedures of an embodiment. The drawings do not limit the present invention to the specific embodiments disclosed and described herein. The drawings are not necessarily to scale, emphasis instead being placed upon clearly illustrating the principles of the invention. The present disclosure will become more fully understood from the detailed description and the accompanying drawings, wherein:
FIG. 1 shows an exemplary webpage that enables a user to execute a financial transaction via online banking;
FIG. 2 shows an exemplary webpage that enables a user to confirm a payment via online banking;
FIG. 3 is a flow chart showing a protection procedure according to certain embodiments of the present disclosure;
FIG. 4 is a flow chart showing the protection procedure according to certain embodiments of the present disclosure;
FIG. 5 is a block diagram showing an apparatus running the protection procedure according to certain embodiments of the present disclosure; and
FIG. 6 is a block diagram showing a request interceptor of the apparatus in FIG. 5 according to certain embodiments of the present disclosure.

### DETAILED DESCRIPTION OF THE INVENTION

The following description is merely illustrative in nature and is not intended to limit the disclosure, its application, or uses. The broad teachings of the disclosure can be implemented in a variety of forms. Therefore, while this disclosure includes particular examples, the scope of the disclosure should not be so limited since other modifications will become apparent upon a study of the drawings, the specification, and the following claims. For purposes of clarity, the same reference numbers will be used in the drawings to identify similar procedures or components. As used herein, the phrase at least one of A, B, and C should be construed to mean a logical (A or B or C), using a non-exclusive logical OR. It should be understood that one or more steps within a method may be executed in different order (or concurrently) without altering the principles of the present disclosure.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. The use of examples anywhere in this specification, including examples of any terms discussed herein, is illustrative only, and in no way limits the scope and meaning of the disclosure or of any exemplified term. Likewise, the disclosure is not limited to various embodiments given in this specification.

As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise.

As used herein, the terms "comprising," "including," "having," "containing," "involving," and the like are to be understood to be open-ended, i.e., to mean including but not limited to.

As used herein, the term module or unit may refer to, be part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

The term code, as used above, may include software, firmware, and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The apparatuses and methods described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

In modern computer technologies, a browser may be a component supported by a platform of an operation system. For example, a MICROSOFT INTERNET EXPLORER is a component supported by the MICROSOFT Component Object Model (COM) platform. A user process may create an INTERNET EXPLORER object through COM APIs (Application Programming Interfaces) and libraries. COM platform provides a communication mechanism, by making use of connection points and sinks, to support communication between a COM client and a COM server. For example, the COM client passes a connection point to the COM server. The COM server, upon occurrence of certain events, can use the connection point to pass messages to a sink of the COM client.

A Trojan program typically is malicious code designed primarily to give a hacker access to system files of a user's computer. This gives hackers the ability to change file settings, steal files or passwords, damage files, monitor user activities, or execute processes that are not authorized by the user on the user's computer.

Generally, when a Trojan program attempts to modify a payment page rendered by a browser (or similarly other application program capable of rendering webpage), the Trojan program will go through the following three steps: (a) registering the Trojan program for receiving events of or callbacks from the browser rendering the payment page, (b) determining whether a page rendered by the browser is a target payment page that the Trojan program intends to modify, and (c) modifying the payment page identified in the step (b). A payment page refers to a graphic display rendered by an application program (e.g., a webpage rendered by a browser) that is used by a user in execution of an online financial transaction. For example, the webpage shown in FIG. 2 is a payment page and it enables a user of the browser to transfer fund from the user's account to another party. Examples of browsers may include any browser executable on a user terminal such as a desktop or a mobile device, for instance, a MICROSOFT INTERNET EXPLORE browser, a FIREFOX browser, a QQ browser, a Chrome browser, or a Safari browser.

Depending on the circumstances, the below description may use MICROSOFT INTERNET EXPLORER browser as an example to explain the techniques or features of the present disclosure. One skilled in the art would appreciate that those techniques or features can be similarly applied to other browser applications or User Interface applications. When a user uses an INTERNET EXPLORER browser to browse the Internet, a Trojan program installed on the computer can monitor the Uniform Resource Locator (URL) of the webpage that the user is accessing through the INTERNET EXPLORER browser. The Trojan program can receive URLs, for example, through a BeforeNavigate2 event generated by the INTERNET EXPLORER browser. The Trojan program then compares the URL of the current webpage rendered by the INTERNET EXPLORER browser or the URLs contained in the current webpage with a table or list of known payment webpage URLs. If the current URLs match a known payment page URL in the table or list, the Trojan program can attempt to modify the webpage through the Write function of the IHTMLDocument 2 interface, displaying at the INTERNET EXPLORER browser a tampered webpage that redirects the payment from the user to an illegitimate party provided by the Trojan program.

In tampering a payment page, the Trojan program typically utilizes the following interfaces: (a) a callback registration interface through which a program can register itself to receive events raised by a browser that relate to browser navigation, (b) a browser object interface through which a program can access the properties and functions of the browser, and (c) an HTML modification interface through which a program can access a particular webpage rendered by the browser and modify the content of the webpage. These interfaces, through which access and modification to a particular webpage may be performed, can be collectively referred to as webpage modification interfaces.

A Trojan program typically runs on a separate (or different) process from browser processes. A request from the Trojan process made to the browser process is thus typically an inter-process request or an external request. Certain embodiments of the present disclosure monitor inter-process requests or external requests for accessing the browser process. It may not be necessary to identify the source of the external request, i.e., to determine if the request is from the Trojan process; all external requests or inter-process requests for accessing the browser process can be intercepted.

Certain embodiments of the present disclosure implement a protection procedure that prevents a Trojan program from tampering a payment page (e.g. an online banking webpage) rendered by a browser. In order to determine whether an inter-process call has been made to the browser process, the protection procedure can initially determine whether the call stack of a program implementing the webpage modification interface described above contains a file, procedure, routine, or any program that implements or relates to a remote procedure call (RPC). If the call stack of such a program contains a RPC call related file, the protection procedure can determine that an inter-process request for accessing the webpage modification interface has occurred. For example, in a COM environment, the protection procedure determines whether a RPCRT4.dll file exists in one or more of the call stacks of a container interface of a container supporting a browser object, a browser object interface, and a HTML modification interface through which a program can modify a particular HTML webpage of the browser. More particularly, these call stacks may include the call stacks of programs implementing the IHTMLDocument2, IConnectionPointContainer or IConnectionPoint, and IWebBrowser2 interfaces. For example, a single webpage display of the browser may implement the IHTMLDocument2 interface; a COM container module may implement the IConnectionPointContainer interface; a COM connection point module may implement the IConnectionPoint interface; and an INTERNET EXPLORER browser may implement the IWebBrowser2 interface. In this example, if the RPCRT4.dll file exists in one or more of these call stacks, it can be determined that the received request made to the above described container interface, the browser object interface, or the HTML modification interface is an external or inter-process request.

There are many types of external or inter-process requests. For example, in order to tamper a payment page in a COM environment, a Trojan program typically needs to access: (a) a function of the callback registration interface that allows the Trojan program to register itself to receive events or callbacks from the browser; (b) a local URL obtainment function of the browser object interface that returns the URL of the webpage currently being rendered by the browser; and (c) a function of the HTML modification interface that is used to provide the content of the page being rendered by the browser. Some specific examples of these functions include the Advise function of the IConnectionPoint interface, the GetLocationURL function of the IWebBrowser2 interface, and the Write function of the IHTMLDocument2 interface.

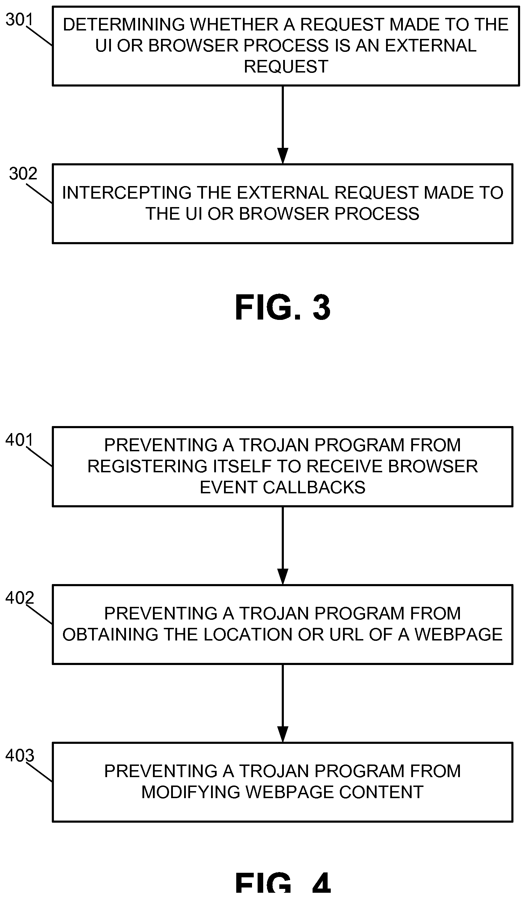

FIG. 3 is a flow chart showing a protection procedure in accordance with certain embodiments of the present disclosure. At operation 301, the protection procedure determines whether the request made to the browser process is an external request. At operation 302, the protection procedure intercepts the external request made to the browser process. The external request can be an inter-process request sent by a process different from those of the browser.

A browser can render various webpages. The protection procedure may be adapted to protect various types of webpages rendered by the browser. In certain embodiments, the protection procedure concerns preventing unauthorized payment through tampered payment webpages. If the protection procedure determines that the current webpage rendered by the browser is not a payment webpage or that the external requests received is not related to any payment webpage, the protection procedure can choose not to intercept those external requests.

As such, at the operation 301, the protection procedure can also determine whether the webpage rendered by the browser is a payment webpage.

In certain embodiments, the protection procedure examines the URL of a webpage to determine whether the webpage is a payment page. The URLs of known payment pages can be stored as a table or a list on the local computer running the protection procedure or on a network storage device. As an illustrating example, the following URL is a URL of a payment webpage. The URL is:
<https://netpay.cmbchina.com/netpayment/BaseHttp.dll>. This payment webpage also contains payment URL links such as:
   <rule host="https://netpay.cmbchina.com" path="/netpayment/BaseHttp.dll?PrePay C*" level="3"/>

The protection procedure can, in order to determine whether the webpage is a payment page, compare the above-mentioned URL of the webpage and the links contained in the webpage with the stored URLs and/or determine whether the URL and links contain the defining characteristics of payment page. The defining characteristics can be predetermined and stored in the URL table or list of the computer system.

FIG. 4 is a flow chart showing the protection procedure according to certain embodiments of the present disclosure. In order to prevent payment webpage tampering, one or more of following operations can be taken: operation 401 for preventing a Trojan program from registering itself to receive browser event callbacks; operation 402 for preventing a Trojan program from obtaining the location or the URL of a webpage; and operation 403 for preventing a Trojan program from modifying webpage content.

In certain embodiments, the operation 403 can be combined with the operation 401 and the operation 402. These operations are not necessarily executed in the above listed sequences.

In certain embodiments, the operation 401 can prevent malicious programs such as a Trojan program from obtaining information of the browser or calling functions of the browser. In order to monitor the browser's events, the Trojan program typically needs to call the callback registration interface to register itself to receive browser events. For example, in a COM environment, the Trojan program needs to call the Advise functions of connection point objects implementing the IConnectionPoint interface held by the browser objects or browser helper objects in order to signal that the Trojan program is interested in receiving callbacks or events of the browser. If calls made to the callback registration interface are intercepted, then the Trojan program will not be able to obtain the browser event information. Without the browser event information, the Trojan program will not be able to modify the webpage.

The operation 402 can prevent malicious program such as the Trojan program from obtaining the location or the URL of the page rendered by the browser (e.g. the local URL shown in the address bar of the browser). Normally the Trojan program needs to have this URL to determine whether the page being rendered by the browser is a payment page. The Trojan program often receives multiple URLs from a browser event callback. For example, if a webpage contains frames, the Trojan program will receive multiple URLs from the browser event. The Trojan program must call a function of the browser object interface to obtain the URL of the page currently being rendered by the browser, and use the URL to determine whether the current page is a payment page. In a COM environment, the Trojan program calls the GetLocationURL function of the IWebBrowser2 interface to obtain this URL. At the operation 402, the protection procedure intercepts calls made by the Trojan program to such a function of the browser object interface. Thus, the Trojan program will not be able to determine whether the current page is a payment page based on the URL of the page.

The operation 403 can prevent malicious program such as a Trojan program from modifying the content of a webpage. The Trojan program eventually needs to call a HTML modification interface in order to modify the payment page being rendered by the browser. In a COM environment, the Trojan program calls the Write function of the IHTMLDocument2 interface to modify the webpage content. At the operation 403, the protection procedure can intercept calls made by the Trojan program to such a function of the HTML modification interface. Thus, the protection procedure prevents the Trojan program from modifying the content of the page rendered by the browser.

In certain embodiments, when executing one or more of the operations 401-403, as discussed above, the protection procedure can also determine whether the current request is an inter-process or external request. In a COM environment, the protection procedure checks the call stacks of programs implementing the IHTMLDocument2, IConnectionPointContainer, IConnectionPoint, and IWebBrowser2 interfaces. Usually, if these call stacks contain an RPC related file such as RPCRT4.dll, the protection procedure can determine that a current request made to the above interfaces is an inter-process or external request. Intercepting this inter-process or external request can prevent the Trojan program from accessing the above described container interface, the browser object interface, and the HTML modification interface.

The protection procedure can be implemented at the same computer on which the browser is running. The protection procedure can run on a process executed by a processor (e.g. a CPU) of the computer. The process of the protection procedure can be the same as the browser process. For example, the protection procedure can be implemented as a plug-in program for the browser. The process of the protection procedure can alternatively be a stand-alone and separate process from the browser process.

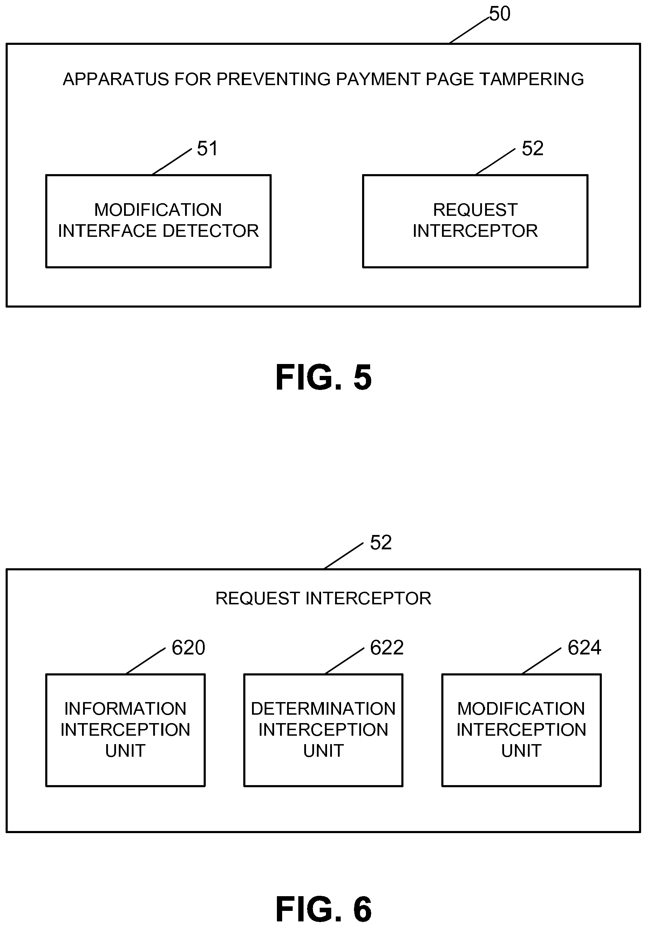

FIG. 5 is a block diagram showing an apparatus running the protection procedure according to certain embodiments of the present disclosure. The apparatus 50 includes: (a) a modification interface detector 51 configured to detect whether a request or call received by the webpage modification interface is an external request, and (b) a request interceptor 52 configured to intercept the external request when the external request is detected by the modification interface detector 51. The external request can be an inter-process request from a processes different from a webpage process currently running. The modification interface detector 51 and the request interceptor 52 can be physical and/or logical modules that employ or utilize necessary hardware (e.g., a processor and a memory) and software to implement the desired features.

The webpage modification interface includes the callback registration interface for a program to register itself to receive callbacks or notifications of browser events relating to modifying a payment page, the browser object interface, and one or more of the HTML modification interfaces. The above described external request accordingly includes calls made to the advise function of the callback registration interface, the local URL obtainment function of the browser object interface, and one or more of the write functions of the HTML modification interface. The advise function of the callback registration interface allows a program to register itself to receive events or callbacks from the browser. The local URL obtainment function of the browser object interface allows a program to retrieve the URL of the webpage that the browser object is currently rendering, which is generally the URL shown in the address bar of the browser. The write functions of the HTML modification interface allows a program to provide the content that is to be rendered by the browser. In a COM environment, an example of the advise function of the callback registration interface is the Advise function of the IConnectionPoint interface. An example of the local URL obtainment function is the GetLocationURL function of the IWebBrowser2 interface. An example of the write functions of the HTML modification interface is the Write function of the IHTMLDocument2 interface.

In certain embodiments, the modification interface detector 51 can be also used to determine whether the call stack of a process running the webpage modification interface contains a RPC related file (such as RT4.dll file). When the modification interface detector 51 determines that the call stack contains such a file, then it determines that the webpage modification interface has received an external request. The modification interface detector 51 can also be used to determine whether the current page rendered by the browser is a payment page.

FIG. 6 is a block diagram showing a request interceptor 52 of the apparatus according to certain embodiments of the present disclosure. The request interceptor 52 can include at least one of: (a) an information interception unit 620 configured to intercept calls or requests from another process made to the advise function of the callback registration interface (such as the Advise function of the IConnectionPoint interface) in order to obtain browser information; (b) a determination interception unit 622 configured to intercept calls or requests from another process made to the local URL obtainment function of the browser object interface (such as the GetLocationURL function of the IWebBrowser2 interface) in order to determine if the current page is a payment page; and (c) a modification interception unit 624 configured to intercept calls or requests from another process made to the write function of the HTML modification interface (such as the Write function of the IHTMLDocument2 interface) in order to modify the content of a payment page.

Certain embodiments of the present disclosure can effectively prevent payment webpage tampering by a Trojan program. For example, external requests from a malicious program such as a Trojan program that attempts to tamper a payment webpage can be distinguished, detected and intercepted by certain embodiments of the present disclosure. Certain embodiments can improve the safety and security of online banking and electronic payment transactions.

As it is understood by the person skilled in the art, parts or all of the features of present disclosure can be implemented by computer programs executed by related computer hardware including a processor. The present disclosure can be stored in a computer readable/writable medium, which includes magnetic disk, CD/DVD, Read-Only Memery or ROM, and Random Access Memory or RAM.

The foregoing description of the exemplary embodiments of the invention has been presented only for the purposes of illustration and description and is not intended to be exhaustive or to limit the invention to the precise forms disclosed. Many modifications and variations are possible in light of the above teaching.
The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains.

## Claims

1. A method for preventing webpage tampering, wherein the method comprises:
determining (301) whether a first request received by a webpage modification interface is an external request, the external request being an inter-process request made by a second process different from a first process running the webpage modification interface, the first process being executed by a processor; and
in response to determining that the first request is an external request, intercepting (302) the first request;
wherein the webpage modification interface comprises a HTML modification interface, the external request comprises a request made to a Write function of the HTML modification interface, and the Write function of the HTML modification interface allows a program to provide a content to be rendered to a browser and comprises a Write function of an IHTMLDocument2 interface; and
intercepting the first request comprises:
intercepting a call made from the second process to the Write function of the HTML modification interface to modify a content of a webpage which is currently rendered by the browser.

2. The method of claim 1, wherein the webpage modification interface further comprises at least one of a callback registration interface that allows a program to register for receiving callbacks or events from the browser and relating to modifying the webpage, and a browser object interface.

3. The method of claim 2, wherein the external request further comprises a request made to an advise function of the callback registration interface, or a local URL obtainment function of the browser object interface,
wherein the advise function of the callback registration interface allows a program to register for receiving the callbacks or events from the browser, and the local URL obtainment function of the browser object interface allows a program to retrieve the URL of the webpage.

4. The method of claim 3, wherein the advise function of the callback registration interface comprises an Advise function of an IConnectionPoint interface, and the local URL obtainment function of the browser object interface comprises a GetLocationURL function of an IWebBrowser2 interface.

5. The method of claim 3, wherein the intercepting the first request comprises at least one of
intercepting a call made from the second process to the advise function of the callback registration interface to obtain browser information; and
intercepting a call made from the second process to the local URL obtainment function of the browser object interface to determine whether a page currently being rendered by a browser is a payment page.

6. The method of claim 1, wherein the determining whether the first request received by the webpage modification interface is an external request comprises
determining whether a call stack of the webpage modification interface contains a remote procedure call (RPC) related file; and
determining, in response to determining that the call stack contains a RPC related file, that the first request received by the webpage modification interface is an external request.

7. The method of claim 6, wherein the RPC related file include RPCRT4.dll file.

8. The method of claim 1, further comprising determining whether a page currently being rendered by a browser is a payment page by comparing a URL of the page to predetermined defining characteristics of payment webpage URLs.

9. An apparatus for preventing payment page tampering (50), wherein the apparatus comprises:
a modification interface detector (51) configured to determine whether a first request received by a webpage modification interface is an external request, the external request being an inter-process request made by a second process different from a first process running the webpage modification interface; and
a request interceptor (52) configured to, in response to determining that the first request is an external request, intercept the first request;
wherein the webpage modification interface comprises a HTML modification interface, the external request comprises a request made to a Write function of the HTML modification interface, and the Write function of the HTML modification interface allows a program to provide a content to be rendered to a browser and comprises a Write function of an IHTMLDocument2 interface; and
a modification interception unit (624) configured to intercept a call made from the second process to the Write function of the HTML modification interface to modify a content of a webpage which is currently rendered by the browser.

10. The apparatus of claim 9, wherein the webpage modification interface further comprises at least one of a callback registration interface that is configured to allow a program to register for receiving callbacks or events from the browser and relating to modifying the webpage, and a browser object interface, and
wherein the external request further comprises a request made to an advise function of the callback registration interface, or a local URL obtainment function of the browser object interface,
wherein the advise function of the callback registration interface is configured to allow a program to register for receiving the callbacks or events from the browser, and the local URL obtainment function of the browser object interface is configured to allow a program to retrieve the URL of the webpage.

11. The apparatus of claim 10, wherein the advise function of the callback registration interface comprises an Advise function of an IConnectionPoint interface, and the local URL obtainment function of the browser object interface comprises a GetLocationURL function of an IWebBrowser2 interface.

12. The apparatus of claim 10, wherein the request interceptor (52) comprises:
an information interception unit (620) configured to intercept a call made from the second process to the advise function of the callback registration interface to obtain browser information; and
a determination interception unit (622) configured to intercept a call made from the second process to the local URL obtainment function of the browser object interface to determine whether a page currently being rendered by a browser is a payment page

13. The apparatus of claim 9, wherein the modification interface detector (51) is further configured to
determine whether a call stack of the webpage modification interface contains an RPCRT4.dll file, and
determine, in response to determining that the call stack contains a RPCRT4.dll file, that the first request received by the webpage modification interface is an external request.

14. The apparatus of claim 9, wherein the modification interface detector (51) is further configured to determine whether a page currently being rendered by a browser is a payment page by comparing a URL of the page to predetermined defining characteristics of payment webpage URLs.

15. A computer-readable medium storing instructions, wherein the instructions, when executed by a processor, cause a computer to perform a method for preventing payment page tampering, the method comprising:
determining whether a first request received by a webpage modification interface is an external request, the external request being an inter-process request made by a second process different from a first process running the webpage modification interface; and
in response to determining that the first request is an external request, intercepting the first request;
wherein the webpage modification interface comprises a HTML modification interface, the external request comprises a request made to a write function of the HTML modification interface, and the write function of the HTML modification interface allows a program to provide a content to be rendered to a browser and comprises a Write function of an IHTMLDocument2 interface; and
intercepting the first request comprises:
intercepting a call made from the second process to the write function of the HTML modification interface to modify a content of a webpage which is currently rendered by the browser.

## Patentansprüche

1. Verfahren zur Verhinderung der Manipulation von Webseiten, wobei das Verfahren umfasst:
Bestimmen (301), ob eine erste Anfrage, die von einer Webseitenmodifikationsschnittstelle empfangen wird, eine externe Anfrage ist, wobei die externe Anfrage eine Interprozessanfrage ist, die von einem zweiten Prozess erfolgt ist, der sich von einem ersten, die Webseitenmodifikationsschnittstelle betreibenden Prozess unterscheidet, wobei der erste Prozess von einem Prozessor ausgeführt wird; und
in Reaktion auf das Bestimmen, dass die erste Anfrage eine externe Anfrage ist, Abfangen (302) der ersten Anfrage;
wobei die Webseitenmodifikationsschnittstelle eine HTML-Modifikationsschnittstelle umfasst, die externe Anfrage eine Anfrage an eine Schreibfunktion der HTML-Modifikationsschnittstelle umfasst, und die Schreibfunktion der HTML-Modifikationsschnittstelle einem Programm erlaubt, einem Browser einen zu rendernden Inhalt bereitzustellen, und eine Schreibfunktion einer IHTMLDokument2-Schnittstelle umfasst; und
das Abfangen der ersten Anfrage umfasst:
Abfangen eines Aufrufs, der von dem zweiten Prozess an die Schreibfunktion der HTML-Modifikationsschnittstelle erfolgt ist, um einen Webseiteninhalt zu modifizieren, der aktuell vom Browser gerendert wird.

2. Verfahren nach Anspruch 1, bei dem die Webseitenmodifikationsschnittstelle ferner mindestens eine von einer Rückrufregistrierungsschnittstelle, die einem Programm erlaubt, sich für den Empfang von Rückrufen oder Ereignissen vom Browser, die sich auf das Modifizieren der Webseite beziehen, zu registrieren, und einer Browserobjektschnittstelle umfasst.

3. Verfahren nach Anspruch 2, bei dem die externe Anfrage ferner eine Anfrage an eine Beratungsfunktion der Rückrufregistrierungsschnittstelle oder eine lokale URL-Erlangungsfunktion der Browsererobjektschnittstelle umfasst,
wobei die Beratungsfunktion der Rückrufregistrierungsschnittstelle einem Programm erlaubt, sich für den Empfang der Rückrufe oder Ereignisse vom Browser zu registrieren, und die lokale URL-Erlangungsfunktion der Browserobjektschnittstelle einem Programm erlaubt, die URL der Webseite abzurufen.

4. Verfahren nach Anspruch 3, bei dem die Beratungsfunktion der Rückrufregistrierungsschnittstelle eine Beratungsfunktion einer IConnectionPoint-Schnittstelle umfasst, und die lokale URL-Erlangungsfunktion der Browserobjektschnittstelle eine GetLocationURL-Funktion einer IWebBrowser2-Schnittstelle umfasst.

5. Verfahren nach Anspruch 3, bei dem das Abfangen der ersten Anfrage mindestens einen der folgenden Schritte umfasst:
Abfangen eines Aufrufs, der von dem zweiten Prozess an die Beratungsfunktion der Rückrufregistrierungsschnittstelle erfolgt ist, um Browserinformationen zu erhalten; und
Abfangen eines Aufrufs, der von dem zweiten Prozess an die lokale URL-Erlangungsfunktion der Browserobjektschnittstelle erfolgt ist, um zu bestimmen, ob eine Seite, die aktuell von einem Browser gerendert wird, eine Zahlungsseite ist.

6. Verfahren nach Anspruch 1, bei dem das Bestimmen, ob die von der Webseitenmodifikationsschnittstelle empfangene erste Anfrage eine externe Anfrage ist,
das Bestimmen umfasst, ob ein Aufrufstapel der Webseitenmodifikationsschnittstelle eine auf den Programmfernaufruf (RPC) bezogene Datei enthält; und
das Bestimmen in Reaktion auf das Bestimmen, dass der Aufrufstapel eine auf RPC-bezogene Datei enthält, dass die von der Webseitenmodifikationsschnittstelle empfangene erste Anfrage eine externe Anfrage ist.

7. Verfahren nach Anspruch 6, bei dem die RPC-bezogene Datei eine RPCRT4.dll-Datei ist.

8. Verfahren nach Anspruch 1, das ferner Bestimmen umfasst, ob eine aktuell von einem Browser gerenderte Seite eine Zahlungsseite ist, durch Vergleichen einer URL der Seite mit vorbestimmten definierenden Eigenschaften von Zahlungswebseiten-URLs.

9. Vorrichtung zur Verhinderung der Manipulation von Zahlungswebseiten (50), wobei die Vorrichtung umfasst:
einen Modifikationsschnittstellendetektor (51), der dazu konfiguriert ist, zu bestimmen, ob eine erste Anfrage, die von einer Webseitenmodifikationsschnittstelle empfangen wird, eine externe Anfrage ist, wobei die externe Anfrage eine Interprozessanfrage ist, die von einem zweiten Prozess erfolgt, der sich von einem ersten, die Webseitenmodifikationsschnittstelle betreibenden Prozess unterscheidet; und
einen Anfragenabfänger (52), der dazu konfiguriert ist, in Reaktion auf das Bestimmen, dass die erste Anfrage eine externe Anfrage ist, die erste Anfrage abzufangen, wobei die Webseitenmodifikationsschnittstelle eine HTML-Modifikationsschnittstelle umfasst, die externe Anfrage eine Anfrage an eine Schreibfunktion der HTML-Modifikationsschnittstelle umfasst, und die Schreibfunktion der HTML-Modifikationsschnittstelle einem Programm erlaubt, einem Browser einen zu rendernden Inhalt bereitzustellen, und eine Schreibfunktion einer IHTMLDokument2-Schnittstelle umfasst; und
eine Modifikationsabfangeinheit (624), die dazu konfiguriert ist, einen Aufruf abzufangen, der von dem zweiten Prozess an die Schreibfunktion der HTML-Modifikationsschnittstelle erfolgt ist, um einen Webseiteninhalt zu modifizieren, der aktuell vom Browser gerendert wird.

10. Vorrichtung nach Anspruch 9, bei der die Webseitenmodifikationsschnittstelle ferner mindestens eine von einer Rückrufregistrierungsschnittstelle, die dazu konfiguriert ist, einem Programm zu erlauben, sich für den Empfang von Rückrufen oder Ereignissen vom Browser, die sich auf das Modifizieren der Webseite beziehen, zu registrieren, und einer Browserobjektschnittstelle umfasst, und
wobei der die externe Anfrage ferner eine Anfrage an eine Beratungsfunktion der Rückrufregistrierungsschnittstelle oder eine lokale URL-Erlangungsfunktion der Browserobjektschnittstelle umfasst,
wobei die Beratungsfunktion der Rückrufregistrierungsschnittstelle dazu konfiguriert ist, einem Programm zu erlauben, sich für den Empfang der Rückrufe oder Events vom Browser zu registrieren, und die lokale URL-Erlangungsfunktion der Browserobjektschnittstelle dazu konfiguriert ist, einem Programm zu erlauben, die URL der Webseite abzurufen.

11. Vorrichtung nach Anspruch 10, bei der die Beratungsfunktion der Rückrufregistrierungsschnittstelle eine Beratungsfunktion einer IConnectionPoint-Schnittstelle umfasst und die lokale URL-Erlangungsfunktion der Browserobjektschnittstelle eine GetLocationURL-Funktion einer IWebBrowser2-Schnittstelle umfasst.

12. Vorrichtung nach Anspruch 10, bei der der Anfragenabfänger (52) umfasst:
eine Informationsabfangeinheit (620), die dazu konfiguriert ist, einen Aufruf abzufangen, der vom zweiten Prozess an die Beratungsfunktion der Rückrufregistrierungsschnittstelle erfolgt ist, um Browserinformationen zu erhalten; und
eine Bestimmungsabfangeinheit (622), die dazu konfiguriert ist, einen Aufruf abzufangen, der vom zweiten Prozess an die lokale URL-Erlangungsfunktion der Browserobjektschnittstelle erfolgt ist, um zu bestimmen, ob eine Seite, die aktuell von einem Browser gerendert wird, eine Zahlungsseite ist.

13. Vorrichtung nach Anspruch 9, bei der der Modifikationsschnittstellendetektor (51) ferner dazu konfiguriert ist,
zu bestimmen, ob ein Aufrufstapel der Webseitenmodifikationsschnittstelle eine RPCRT4.dll-Datei enthält, und
in Reaktion auf das Bestimmen, dass der Aufrufstapel eine RPCRT4.dll-Datei enthält, zu bestimmen, dass die von der Webseitenmodifikationsschnittstelle empfangene erste Anfrage eine externe Anfrage ist.

14. Vorrichtung nach Anspruch 9, bei der der Modifikationsschnittstellendetektor (51) ferner dazu konfiguriert ist, zu bestimmen, ob eine aktuell von einem Browser gerenderte Seite eine Zahlungsseite ist, durch Vergleichen einer URL der Seite mit vorbestimmten definierenden Eigenschaften von Zahlungswebseiten-URLs.

15. Computerlesbares Medium, das Anweisungen speichert, wobei die Anweisungen, wenn von einem Prozessor ausgeführt, bewirken, dass ein Computer ein Verfahren zur Verhinderung der Manipulation von Zahlungsseiten durchführt, wobei das Verfahren umfasst:
Bestimmen, ob eine erste Anfrage, die von einer Webseitenmodifikationsschnittstelle empfangen wird, eine externe Anfrage ist, wobei die externe Anfrage eine Interprozessanfrage ist, die von einem zweiten Prozess erfolgt ist, der sich von einem ersten, die Webseitenmodifikationsschnittstelle betreibenden Prozess unterscheidet; und
in Reaktion auf das Bestimmen, dass die erste Anfrage eine externe Anfrage ist, Abfangen der ersten Anfrage;
wobei die Webseitenmodifikationsschnittstelle eine HTML-Modifikationsschnittstelle umfasst, die externe Anfrage eine Anfrage an eine Schreibfunktion der HTML-Modifikationsschnittstelle umfasst, und die Schreibfunktion der HTML-Modifikationsschnittstelle einem Programm erlaubt, einem Browser einen zu rendernden Inhalt bereitzustellen, und eine Schreibfunktion einer IHTMLDocument2-Schnittstelle umfasst; und
das Abfangen der ersten Anfrage umfasst:
Abfangen eines Aufrufs, der von dem zweiten Prozess an die Schreibfunktion der HTML-Modifikationsschnittstelle erfolgt ist, um einen Webseiteninhalt zu modifizieren, der aktuell vom Browser gerendert wird.

## Revendications

1. Procédé de prévention de modification frauduleuse de page Web, dans lequel le procédé comprend :
la détermination (301) si une première demande reçue par une interface de modification de page Web est une demande externe, la demande externe étant une demande interprocessus effectuée par un deuxième processus différent d'un premier processus exécutant l'interface de modification de page Web, le premier processus étant exécuté par un processeur ; et
en réponse à la détermination que la première demande est une demande externe, l'interception (302) de la première demande ;
dans lequel l'interface de modification de page Web comprend une interface de modification HTML, la demande externe comprend une demande faite à une fonction Write de l'interface de modification HTML, et la fonction Write de l'interface de modification HTML permet à un programme de fournir un contenu devant être rendu sur un navigateur et comprend une fonction Write d'une interface IHTMLDocument2 ; et
l'interception de la première demande comprend :
l'interception d'un appel effectué depuis le deuxième processus à la fonction Write de l'interface de modification HTML pour modifier un contenu d'une page Web qui est couramment rendue par le navigateur.

2. Procédé selon la revendication 1, dans lequel l'interface de modification de page Web comprend en outre au moins une d'une interface d'enregistrement de rappels qui permet qu'un programme s'enregistre pour recevoir des rappels ou des événements depuis le navigateur et se rapportant à une modification de la page Web, et d'une interface objet de navigateur.

3. Procédé selon la revendication 2, dans lequel la demande externe comprend en outre une demande faite à une fonction Advise de l'interface d'enregistrement de rappels, ou une fonction d'obtention d'URL locale de l'interface objet de navigateur,
dans lequel la fonction Advise de l'interface d'enregistrement de rappels permet qu'un programme s'enregistre pour recevoir des rappels ou des événements depuis le navigateur, et la fonction d'obtention d'URL locale de l'interface objet de navigateur permet qu'un programme récupère l'URL de la page Web.

4. Procédé selon la revendication 3, dans lequel la fonction Advise de l'interface d'enregistrement de rappels comprend une fonction Advise d'une interface IConnectionPoint, et la fonction d'obtention d'URL locale de l'interface objet de navigateur comprend une fonction GetLocationURL d'une interface IWebBrowser2.

5. Procédé selon la revendication 3, dans lequel l'interception de la première demande comprend au moins une parmi
l'interception d'un appel effectué depuis le deuxième processus à la fonction Advise de l'interface d'enregistrement de rappels pour obtenir une information de navigateur ; et
l'interception d'un appel effectué depuis le deuxième processus à la fonction d'obtention d'URL locale de l'interface objet de navigateur pour déterminer si une page étant couramment rendue par un navigateur est une page de paiement.

6. Procédé selon la revendication 1, dans lequel la détermination si la première demande reçue par l'interface de modification de page Web est une demande externe comprend
la détermination si une pile d'appels de l'interface de modification de page Web contient un fichier se rapportant à un appel de procédure à distance (RPC) ; et
la détermination, en réponse à la détermination que la pile d'appels contient un fichier se rapportant à un RPC, que la première demande reçue par l'interface de modification de page Web est une demande externe.

7. Procédé selon la revendication 6, dans lequel le fichier se rapportant à un RPC inclut un fichier RPCRT4.dll.

8. Procédé selon la revendication 1, comprenant en outre la détermination si une page étant couramment rendue par un navigateur est une page de paiement en comparant une URL de la page à des caractéristiques prédéterminées de définition d'URL de page Web de paiement.

9. Appareil de prévention de modification frauduleuse de page Web (50), dans lequel l'appareil comprend :
un détecteur (51) d'interface de modification configuré pour déterminer si une première demande reçue par une interface de modification de page Web est une demande externe, la demande externe étant une demande interprocessus effectuée par un deuxième processus différent d'un premier processus exécutant l'interface de modification de page Web ; et
un intercepteur (52) de demande configuré pour, en réponse à la détermination que la première demande est une demande externe, intercepter la première demande ;
dans lequel l'interface de modification de page Web comprend une interface de modification HTML, la demande externe comprend une demande faite à une fonction Write de l'interface de modification HTML, et la fonction Write de l'interface de modification HTML permet à un programme de fournir un contenu devant être rendu sur un navigateur et comprend une fonction Write d'une interface IHTMLDocument2 ; et
une unité (624) d'interception de modification configurée pour intercepter un appel effectué depuis le deuxième processus à la fonction Write de l'interface de modification HTML pour modifier un contenu d'une page Web qui est couramment rendue par le navigateur.

10. Appareil selon la revendication 9, dans lequel l'interface de modification de page Web comprend en outre au moins une d'une interface d'enregistrement de rappels qui est configurée pour permettre qu'un programme s'enregistre pour recevoir des rappels ou des événements depuis le navigateur et se rapportant à une modification de la page Web, et d'une interface objet de navigateur, et
dans lequel la demande externe comprend en outre une demande faite à une fonction Advise de l'interface d'enregistrement de rappels, ou une fonction d'obtention d'URL locale de l'interface objet de navigateur,
dans lequel la fonction Advise de l'interface d'enregistrement de rappels est configurée pour permettre qu'un programme s'enregistre pour recevoir des rappels ou des événements depuis le navigateur, et la fonction d'obtention d'URL locale de l'interface objet de navigateur est configurée pour permettre qu'un programme récupère l'URL de la page Web.

11. Appareil selon la revendication 10, dans lequel la fonction Advise de l'interface d'enregistrement de rappels comprend une fonction Advise d'une interface IConnectionPoint, et la fonction d'obtention d'URL locale de l'interface objet de navigateur comprend une fonction GetLocationURL d'une interface IWebBrowser2.

12. Appareil selon la revendication 10, dans lequel l'intercepteur (52) de demande comprend :
une unité (620) d'interception d'information configurée pour intercepter un appel effectué depuis le deuxième processus à la fonction Advise de l'interface d'enregistrement de rappels pour obtenir une information de navigateur ; et
une unité (622) d'interception de détermination configurée pour intercepter un appel effectué depuis le deuxième processus à la fonction d'obtention d'URL locale de l'interface objet de navigateur pour déterminer si une page étant couramment rendue par un navigateur est une page de paiement.

13. Appareil selon la revendication 9, dans lequel le détecteur (51) d'interface de modification est en outre configuré pour
déterminer si une pile d'appels de l'interface de modification de page Web contient un fichier RPCRT4.dll, et
déterminer, en réponse à la détermination que la pile d'appels contient un fichier RPCRT4.dll, que la première demande reçue par l'interface de modification de page Web est une demande externe.

14. Appareil selon la revendication 9, dans lequel le détecteur (51) d'interface de modification est en outre configuré pour déterminer si une page étant couramment rendue par un navigateur est une page de paiement en comparant une URL de la page à des caractéristiques prédéterminées de définition d'URL de page Web de paiement.

15. Support lisible par ordinateur stockant des instructions, dans lequel les instructions, lorsqu'elles sont exécutées par un processeur, font qu'un ordinateur met en oeuvre un procédé de prévention de modification frauduleuse de page de paiement, le procédé comprenant :
la détermination si une première demande reçue par une interface de modification de page Web est une demande externe, la demande externe étant une demande interprocessus effectuée par un deuxième processus différent d'un premier processus exécutant l'interface de modification de page Web ; et
en réponse à la détermination que la première demande est une demande externe, l'interception de la première demande ;
dans lequel l'interface de modification de page Web comprend une interface de modification HTML, la demande externe comprend une demande faite à une fonction Write de l'interface de modification HTML, et la fonction Write de l'interface de modification HTML permet à un programme de fournir un contenu devant être rendu sur un navigateur et comprend une fonction Write d'une interface IHTMLDocument2 ; et
l'interception de la première demande comprend :
l'interception d'un appel effectué depuis le deuxième processus à la fonction Write de l'interface de modification HTML pour modifier un contenu d'une page Web qui est couramment rendue par le navigateur.
